# EUROPEAN PATENT APPLICATION

(11) **EP 1 736 897 A2**
(43) Date of publication of application: **27.12.2006**
(21) Application number: 05107829.3
(22) Date of filing: 26.08.2005
(51) Int. Cl.: G06F 17/30

(54) **Method and System for Assignment of Membership Through Script**

(30) Priority: 10.06.2005 US 149591
(71) Applicant: Microsoft Corporation, Redmond WA 98052 (US)
(72) Inventor: McPherson, Dave, 98052, Redmond (US); Gottumukkala, Sunil, 98052, Redmond (US); Kadam, Sunil S., 98052, Redmond (US); Wu, Xiaohong, 98052, Redmond (US)
(74) Representative: Grünecker, Kinkeldey, Stockmair & Schwanhäusser Anwaltssozietät

(57) **Abstract**

A method of determining membership in a group includes receiving a request to determine if an element is a member of a group. The request may be generated by a software application where the application provides at least one parameter to a script which resides external to the application. The script, along with an optional application-provided parameter, is evaluated to determine the membership of the element in the group. Generally, the script is flexibly generated by an administrator independent of the development of the application. After evaluation, a response is sent back to the application where the response is an indication of membership of the element in the group. The method may optionally allows the script to access an external data source to provide additional information to determine membership. In some applications of the invention, determinations of membership may be used for access determination purposes.

## Description

### FIELD OF THE INVENTION

The invention relates generally to the field of software programming and more specifically to the field of determining membership of elements in groups using script external to an application.

### BACKGROUND OF THE INVENTION

The traditional way of evaluating membership is using static information such as lists. In one standard format, a list of elements may represent a group. For example, a list of user names may represent the users of a system who can be granted access to one or more files. However, the list may change or become extensive. For example, the list of authorized users of a family of files may change depending of several factors such as the location of the user, her position with respect to other users, her employment status, and her need to know information contained in the files. It may be desirable for a user to be denied access if she is on vacation in a foreign country or any other security related rule. Such lists may vary by the day or hour depending on circumstances and it may become difficult to update such lists. Such lists may be lists of elements of any kind, such as names of people, products, parameters, dates, locations, services, times, materials, instructions, prices and the like.

If an application requires an assessment of whether an element belongs to a group, such as in the example of access to a file, the application may be programmed with a constraint on the group that ships with the program. For example, an application may be programmed with information that one group is valid from 9AM to 5PM. In this instance, any changes to this constraint to the data file may require the services of a programmer for updates. This type of static list or fixed constraint is inconvenient to update and is simply not flexible to meet changing membership realities. For example, there is no current way to quickly update a shipped software application such that a programmers edits can be responsive to changing conditions in an authorization or access decision based on membership rules in a group.

Given that the condition of some static types of lists can change at runtime, preparing lists at development time may be inappropriate. Thus, there is a need for a dynamic method to determine if an element in group or role based membership exists for factors of the application at runtime. The invention addresses the aforementioned needs and solves them with various systems, methods and techniques that enable a more flexible implementation of membership determination.

### SUMMARY OF THE INVENTION

The present invention is a method to dynamically determine the membership of an element in a group or role. An element may be a person, place or thing. As an example, the element may be a security principal in a group. In an aspect of the invention, the evaluation of membership occurs outside of the application. In this embodiment, a software application may call an application programming interface in requesting resolution to a query concerning membership of at least one element in a group. The resolution of the request by an evaluation engine includes the processing of a script. The script is a list of instructions generated by an administrator and is a dynamic tool that allows the determination of the membership of the element in question. The script is separate from the application which called for the determination and thus the script is independent of the application. The script may access parameters, provided by the application, that help define the membership outcome result at runtime. Since membership may be determined at runtime using runtime parameters of the application, the determination of membership using script is highly flexible. Once the membership is determined, the results are passed back to the application from the evaluation engine.

In another embodiment, the script may also access system data or data from an external database to augment the information provided by the evaluation engine. In this instance, the script may require additional information that is available in a database, along with the application parameters, in the determination of membership of an element to a group.

### BRIEF DESCRIPTION OF THE DRAWINGS

The foregoing summary, as well as the following detailed description of preferred embodiments, is better understood when read in conjunction with the appended drawings. For the purpose of illustrating the invention, there is shown in the drawings exemplary constructions of the invention; however, the invention is not limited to the specific methods and instrumentalities disclosed. In the drawings:

Figure 1 illustrates an example embodiment of a system having aspects of the invention;

Figure 2 illustrates an example method comporting to aspects of the invention; and

Figure 3 is a block diagram showing an exemplary computing environment in which aspects of the invention may be implemented.

### DETAILED DESCRIPTION OF ILLUSTRATIVE EMBODIMENTS

### Exemplary Embodiments of the Invention

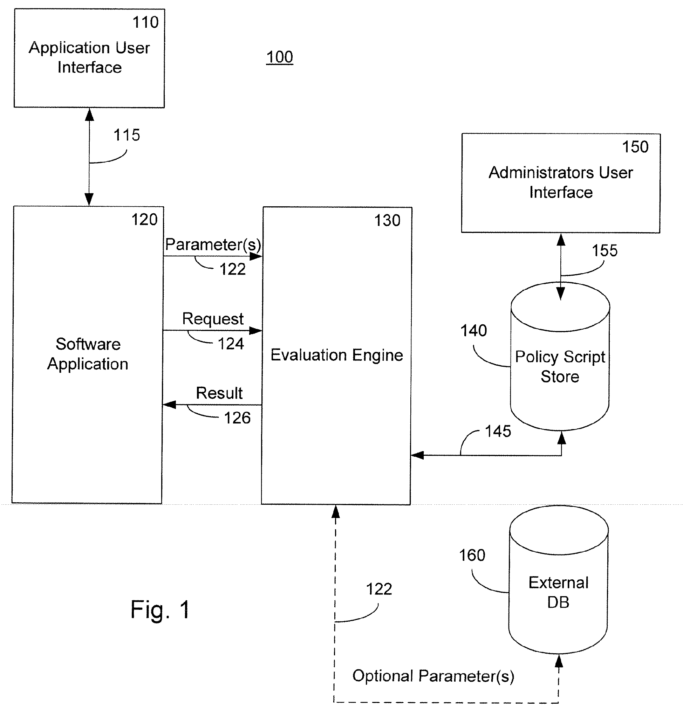

Figure 1 is an example embodiment 100 of the present invention. A software application 120 is communicatively coupled to an evaluation engine 130 to determine the membership of elements in a group. A user interface for the application 110 allows a user to input some runtime parameters that are useful for the proper operation of the application 120. In operation, the software application may require a determination of the membership of an element to a group. In one embodiment, a validation application program interface (API), (not shown), may be accessed by the application to produce a request for membership determination. The API produces a request 124, and provides parameters 122 for the determination of the request 124 to an evaluation engine 130.

The evaluation engine 130 is separate from the application 120. One benefit to this configuration is that an application may be developed and released without the evaluation engine code being developed. This allows an administrator to develop script to aid in the determination of membership that is customized to the environment in which the application resides. Also, the script executed by the evaluation engine 130 may use the runtime parameters 122 passed from the application that are unique to the application's use within the user's system.

In one embodiment, the script used by the evaluation engine can be VBScript® or Jscript® available from Microsoft® of Redmond, Washington. The script may be associated with a group or role object. The script may be produced programmatically or through an administrative use interface 150 by a software administrator or software deployer. The script and the associated group or role may be stored in a persisted authorization policy store 140 linked 155 to the user interface. In one embodiment, the application 120 may be developed to support a validation API which invokes the evaluation engine functionality and uses the persisted authorization policy 140 to assist in the determination of membership requests.

In one embodiment, the request may take the form of an access request 124 from a security principle user 110 of an application 120. When a security principal requests 115 access to an application resource, the application 120 may use an access validation API to determine if the security principal has the requested access. To accomplish this, the application 120 calls the access validation API code and passes data parameters that identify the resource, the security principal, and application data which can be used within the script code. The application resource may be the item for which access is sought. For example, a file, directory, database or computer system. The access validation API can examine the persisted authorization policy 140 via link 145. The access validation API executes the script associated with the evaluation engine 130 to determine if the security principal is a member of the associated group or role. This evaluation may include the application specific parameters 122 and/or routines. If the script evaluation determines that the security principal is a member of the group or role then the access validation API will return result information 126 to describe the security principal's access to application resources corresponding to the access given to the group or role. The script based group or role may also be evaluated by an administrative API associated with the administrators user interface 150 when an administrator queries the access for a given security principal. Thus the administrator may be able to test and determine the effectiveness of her script.

In one embodiment, the script, once invoked via a validation API executes in the evaluation engine using the application parameters 122. The script may be formed as IF / THEN statements for ease of logical construction and development by an administrator. The script may request access to an interface 122 that accesses an external database 160 which may have optional parameters. These optional parameters may be used along with the runtime application parameters 122 to determine the membership in a group.

There are many applications for a membership determination function held separately from an application. The present invention may find application in a dynamic check for credit. A banking application may want to assess the credit-worthiness of a person. A script may be written by an administrator that itself has variables such as the daily loan rates and risk assessment criteria. Thus, an application may request an evaluation engine running a script to determine if a given candidate is in a group of people who may be approved for a loan. Once the particulars of the person are passed to the evaluation engine in the form of parameters, the daily loan rates may be accessed via an external database. Once the credit evaluation is made, the result of the evaluation may be returned to the application for further processing of the credit application.

In one example embodiment, a local county library may wish to use a library software application that uses an external script to indicate if a user may check out a book. Initially, a librarian or a user may access an application that requests the identity of the potential book borrower and the title of the book. The identity of the user may include such information as her age and place of residence. The permissions for the potential borrower or other user may include such things as an availability check for the specific title being requested, a list of related books and a checkout procedure for authorization to get the book. The resources include the book or video title of interest in the local county library. The members of the library may include certain legacy users, such as the library staff and the library founders, but the bulk of potential borrowers may be assessed via a script determined by the librarian or other library administrator. Script based assessments of membership do not exclusively use lists; instead the scripts define rules for membership which are evaluated at runtime. Consequently, membership may be determined as follows:
Membership:
   Legacy Members
   <Books>
   <Videos>

Legacy members may be a database listing of members such as Bob Smith and Sally Hall who are founders of the library and have full access rights to materials held by the library. A request concerning those potential users would return true because they are listed in a database. But, the present invention allows the use of a script for other potential borrowers as follows:
Books
Home = get borrower address
If home = a county residence, then return true, and no late fees
If home = a non county residence, then return true, assess mandatory fee.

Videos
Home = get borrower address
If home = a county residence, then, return true
Else, return false.

The librarian or administrators script allows both residents and non-residents to take out books. An additional script nesting implied above allows residents to not be assessed late fees. Non-county residents can also check out books but, they are assessed a mandatory borrowing fee because they are not county residents. The script for videos has different rules. If the borrower is a county resident, then the video may be checked out. But there is no specialized prohibition against late fees for video borrowing county residents. Non county residents may not borrow videos at all. This example shows the flexibility of the membership rules available via scripting in the present invention. If the librarian administrator decides that videos may be borrowed by non-county residents, the check out application need not change, only the script need change. One of skill in the art can also easily see how temporal rules may be in place for borrowed books or videos as well. Also of note is that traditional group mechanisms would require daily management of these groups as they are subject to constant change.

In another example embodiment, a project management application that stores projects in SQL tables can utilize the current invention. Users in specific roles can perform specific actions on each project. Each project may have the following roles; development, test and project planning and each has specific capabilities on the project object. The role memberships are stored on attributes of the project fields in SQL. An authorization role is created for development, test and project planning each of which assigns membership based on the results of an available script developed separately from the project management application. The development membership script may take the project identifier as a parameter and query the object in SQL. The script can access the project SQL files to assess if a calling user may have access. If the calling user is listed in the development field on the project then the script returns true. If the development field on the appropriate project file does not contain the calling user name, the result may return false. However, even greater flexibility may be provided by the script if the script is able to access an algorithm that can check the calling user identity and perhaps make the assessment that the developer is a subcontractor and still may be granted access under certain verification rules. The flexibility of using script to help determine membership in a group proves useful under changing runtime conditions.

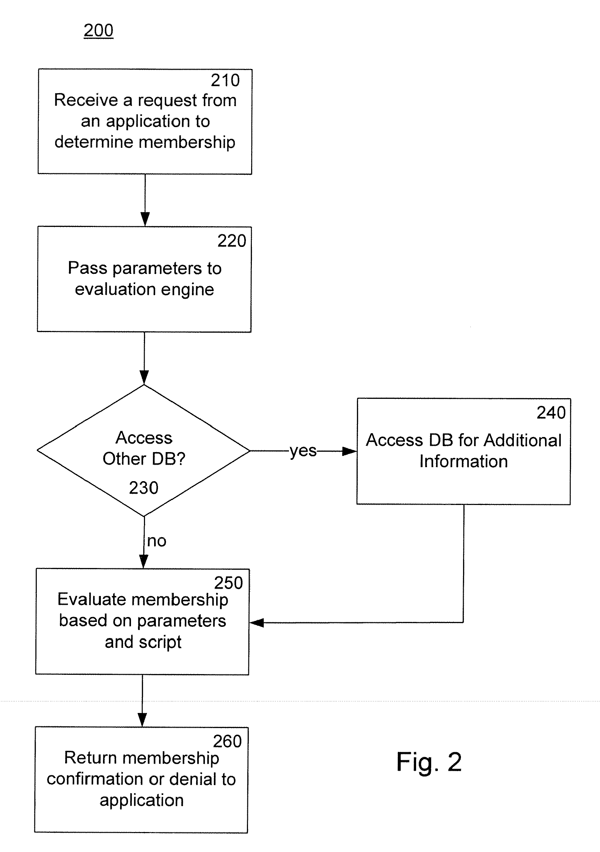

Figure 2 depicts an example method 200 according to aspects of the invention. A request is received from an application to determine membership of an element in a group (step 210). In one embodiment, an API may be called by the application to assess membership. The application optionally passes one or more runtime parameters to the evaluation engine. The application passes these runtime parameters (step 220) to more precisely indicate the subject resources, the element seeking verification of membership, or variables affecting the membership determination outcome. For example, the element may be a name of a user who wishes access to a computer resource and the parameter variable may be the user location and time of day.

Script, written by an administrator, corresponding to rules regulating the membership of an element to a group, are used to evaluate and provide application data against the resource being offered. In some embodiments, the application parameters that are passed to be evaluated by the script may preferably be augmented by other data available in a database. If such additional data is necessary (step 230), then an external database is accessed (step 240) and evaluation of the data according to the script may begin. The script is evaluated (step 250) according to the application-passed parameters and optional additional information. Thus runtime information is used to dynamically evaluate membership of the subject element against the desired computer resources using the administrator script. Once the evaluation is complete, the results of the evaluation, generally a true or false indication, is provided (step 260).

### Exemplary Computing Device

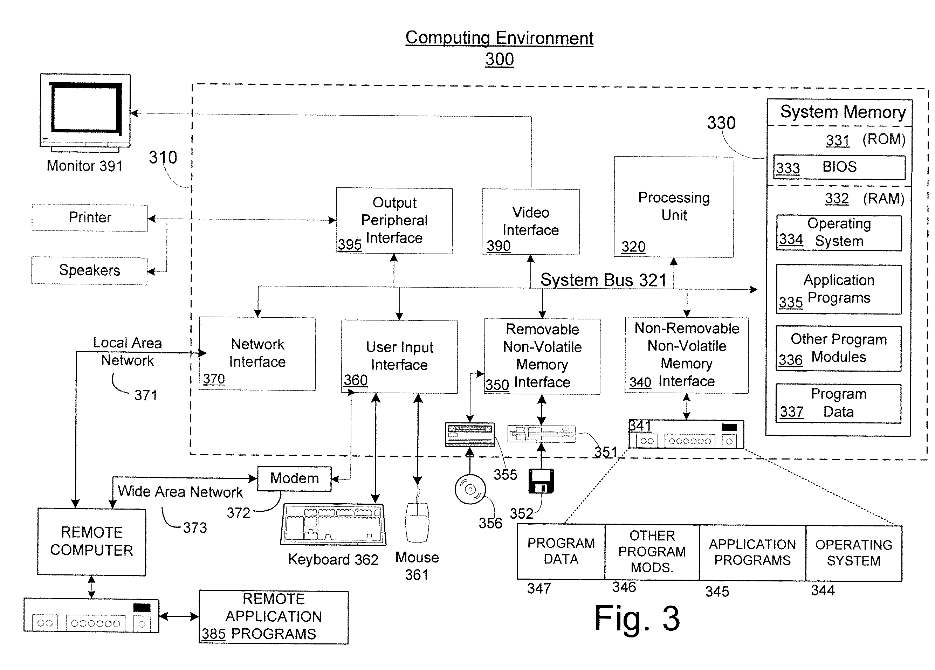

Figure 3 and the following discussion are intended to provide a brief general description of a suitable computing environment in which embodiments of the invention may be implemented. While a general purpose computer is described below, this is but one single processor example, and embodiments of the invention with multiple processors may be implemented with other computing devices, such as a client having network/bus interoperability and interaction. Thus, embodiments of the invention may be implemented in an environment of networked hosted services in which very little or minimal client resources are implicated, e.g., a networked environment in which the client device serves merely as an interface to the network/bus, such as an object placed in an appliance, or other computing devices and objects as well. In essence, anywhere that data may be stored or from which data may be retrieved is a desirable, or suitable, environment for operation.

Although not required, embodiments of the invention can also be implemented via an operating system, for use by a developer of services for a device or object, and/or included within application software. Software may be described in the general context of computer-executable instructions, such as program modules, being executed by one or more computers, such as client workstations, servers or other devices. Generally, program modules include routines, programs, objects, components, data structures and the like that perform particular tasks or implement particular abstract data types. Typically, the functionality of the program modules may be combined or distributed as desired in various embodiments. Moreover, those skilled in the art will appreciate that various embodiments of the invention may be practiced with other computer configurations. Other well known computing systems, environments, and/or configurations that may be suitable for use include, but are not limited to, personal computers (PCs), automated teller machines, server computers, hand-held or laptop devices, multi-processor systems, microprocessor-based systems, programmable consumer electronics, network PCs, appliances, lights, environmental control elements, minicomputers, mainframe computers and the like. Embodiments of the invention may also be practiced in distributed computing environments where tasks are performed by remote processing devices that are linked through a communications network/bus or other data transmission medium. In a distributed computing environment, program modules may be located in both local and remote computer storage media including memory storage devices and client nodes may in turn behave as server nodes.

Figure 3 thus illustrates an example of a suitable computing system environment 300 in which the embodiments of the invention may be implemented, although as made clear above, the computing system environment 300 is only one example of a suitable computing environment and is not intended to suggest any limitation as to the scope of use or functionality of an embodiment of the invention. Neither should the computing environment 300 be interpreted as having any dependency or requirement relating to any one or combination of components illustrated in the exemplary operating environment 300.

With reference to Figure 3, an exemplary system for implementing an embodiment of the invention includes a general purpose computing device in the form of a computer system 310. Components of computer system 310 may include, but are not limited to, a processing unit 320, a system memory 330, and a system bus 321 that couples various system components including the system memory to the processing unit 320. The system bus 321 may be any of several types of bus structures including a memory bus or memory controller, a peripheral bus, and a local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus (also known as Mezzanine bus).

Computer system 310 typically includes a variety of computer readable media. Computer readable media can be any available media that can be accessed by computer system 310 and includes both volatile and nonvolatile media, removable and non-removable media. By way of example, and not limitation, computer readable media may comprise computer storage media and communication media. Computer storage media includes volatile and nonvolatile, removable and non-removable media implemented in any method or technology for storage of information such as computer readable instructions, data structures, program modules or other data. Computer storage media includes, but is not limited to, Random Access Memory (RAM), Read Only Memory (ROM), Electrically Erasable Programmable Read Only Memory (EEPROM), flash memory or other memory technology, Compact Disk Read Only Memory (CDROM), compact disc-rewritable (CDRW), digital versatile disks (DVD) or other optical disk storage, magnetic cassettes, magnetic tape, magnetic disk storage or other magnetic storage devices, or any other medium which can be used to store the desired information and which can accessed by computer system 310. Communication media typically embodies computer readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer readable media.

The system memory 330 includes computer storage media in the form of volatile and/or nonvolatile memory such as read only memory (ROM) 331 and random access memory (RAM) 332. A basic input/output system 333 (BIOS), containing the basic routines that help to transfer information between elements within computer system 310, such as during start-up, is typically stored in ROM 331. RAM 332 typically contains data and/or program modules that are immediately accessible to and/or presently being operated on by processing unit 320. By way of example, and not limitation, Figure 3 illustrates operating system 334, application programs 335, other program modules 336, and program data 337.

The computer system 310 may also include other removable/non-removable, volatile/nonvolatile computer storage media. By way of example only, Figure 3 illustrates a hard disk drive 341 that reads from or writes to non-removable, nonvolatile magnetic media, a magnetic disk drive 351 that reads from or writes to a removable, nonvolatile magnetic disk 352, and an optical disk drive 355 that reads from or writes to a removable, nonvolatile optical disk 356, such as a CD ROM, CDRW, DVD, or other optical media. Other removable/non-removable, volatile/nonvolatile computer storage media that can be used in the exemplary operating environment include, but are not limited to, magnetic tape cassettes, flash memory cards, digital versatile disks, digital video tape, solid state RAM, solid state ROM, and the like. The hard disk drive 341 is typically connected to the system bus 321 through a non-removable memory interface such as interface 340, and magnetic disk drive 351 and optical disk drive 355 are typically connected to the system bus 321 by a removable memory interface, such as interface 350.

The drives and their associated computer storage media discussed above and illustrated in Figure 3 provide storage of computer readable instructions, data structures, program modules and other data for the computer system 310. In Figure 3, for example, hard disk drive 341 is illustrated as storing operating system 344, application programs 345, other program modules 346, and program data 347. Note that these components can either be the same as or different from operating system 334, application programs 335, other program modules 336, and program data 337. Operating system 344, application programs 345, other program modules 346, and program data 347 are given different numbers here to illustrate that, at a minimum, they are different copies. A user may enter commands and information into the computer system 310 through input devices such as a keyboard 362 and pointing device 361, commonly referred to as a mouse, trackball or touch pad. Other input devices (not shown) may include a microphone, joystick, game pad, satellite dish, scanner, or the like. These and other input devices are often connected to the processing unit 320 through a user input interface 360 that is coupled to the system bus 321, but may be connected by other interface and bus structures, such as a parallel port, game port or a universal serial bus (USB). A monitor 391 or other type of display device is also connected to the system bus 321 via an interface, such as a video interface 390, which may in turn communicate with video memory (not shown). In addition to monitor 391, computer systems may also include other peripheral output devices such as speakers 397 and printer 396, which may be connected through an output peripheral interface 395.

The computer system 310 may operate in a networked or distributed environment using logical connections to one or more remote computers, such as a remote computer 380. The remote computer 380 may be a personal computer, a server, a router, a network PC, a peer device or other common network node, and typically includes many or all of the elements described above relative to the computer system 310, although only a memory storage device 381 has been illustrated in Figure 3. The logical connections depicted in Figure 3 include a local area network (LAN) 371 and a wide area network (WAN) 373, but may also include other networks/buses. Such networking environments are commonplace in homes, offices, enterprise-wide computer networks, intranets and the Internet.

When used in a LAN networking environment, the computer system 310 is connected to the LAN 371 through a network interface or adapter 370. When used in a WAN networking environment, the computer system 310 typically includes a modem 372 or other means for establishing communications over the WAN 373, such as the Internet. The modem 372, which may be internal or external, may be connected to the system bus 321 via the user input interface 360, or other appropriate mechanism. In a networked environment, program modules depicted relative to the computer system 310, or portions thereof, may be stored in the remote memory storage device. By way of example, and not limitation, Figure 3 illustrates remote application programs 385 as residing on memory device 381. It will be appreciated that the network connections shown are exemplary and other means of establishing a communications link between the computers may be used.

Various distributed computing frameworks have been and are being developed in light of the convergence of personal computing and the Internet. Individuals and business users alike are provided with a seamlessly interoperable and Web-enabled interface for applications and computing devices, making computing activities increasingly Web browser or network-oriented.

For example, MICROSOFT®'s NET^{™} platform, available from Microsoft Corporation, includes servers, building-block services, such as Web-based data storage, and downloadable device software. While exemplary embodiments herein are described in connection with software residing on a computing device, one or more portions of an embodiment of the invention may also be implemented via an operating system, application programming interface (API) or a "middle man" object between any of a coprocessor, a display device and a requesting object, such that operation may be performed by, supported in or accessed via all of NET^{™}'s languages and services, and in other distributed computing frameworks as well.

As mentioned above, while exemplary embodiments of the invention have been described in connection with various computing devices and network architectures, the underlying concepts may be applied to any computing device or system in which it is desirable to implement a scripted membership determination technique. Thus, the methods and systems described in connection with embodiments of the present invention may be applied to a variety of applications and devices. While exemplary programming languages, names and examples are chosen herein as representative of various choices, these languages, names and examples are not intended to be limiting. One of ordinary skill in the art will appreciate that there are numerous ways of providing object code that achieves the same, similar or equivalent systems and methods achieved by embodiments of the invention.

The various techniques described herein may be implemented in connection with hardware or software or, where appropriate, with a combination of both. Thus, the methods and apparatus of the invention, or certain aspects or portions thereof, may take the form of program code (i.e., instructions) embodied in tangible media, such as floppy diskettes, CD-ROMs, hard drives, or any other machine-readable storage medium, wherein, when the program code is loaded into and executed by a machine, such as a computer, the machine becomes an apparatus for practicing the invention. In the case of program code execution on programmable computers, the computing device will generally include a processor, a storage medium readable by the processor (including volatile and non-volatile memory and/or storage elements), at least one input device, and at least one output device. One or more programs that may utilize the signal processing services of an embodiment of the present invention, e.g., through the use of a data processing API or the like, are preferably implemented in a high level procedural or object oriented programming language to communicate with a computer. However, the program(s) can be implemented in assembly or machine language, if desired. In any case, the language may be a compiled or interpreted language, and combined with hardware implementations.

While aspects of the present invention has been described in connection with the preferred embodiments of the various figures, it is to be understood that other similar embodiments may be used or modifications and additions may be made to the described embodiment for performing the same function of the present invention without deviating therefrom. Furthermore, it should be emphasized that a variety of computer platforms, including handheld device operating systems and other application specific operating systems are contemplated, especially as the number of wireless networked devices continues to proliferate. Therefore, the claimed invention should not be limited to any single embodiment, but rather should be construed in breadth and scope in accordance with the appended claims.

## Claims

1. A method of determining membership in a group, the method comprising:
receiving, from a software application, a runtime request to determine if an element is a member of a group, the request being received by an evaluation engine having policy rules defining the group;
evaluating membership of the element in the group after the runtime request is received by applying the policy rules maintained external to the application, the policy rules being available to an administrator for modification independently of the application; and
sending a response to the application, wherein the response is an indication of membership of the element in the group.

2. The method of claim 1, further comprising:
accessing a database external to the application to acquire additional information for evaluation of the request.

3. The method of claim 1, wherein evaluating membership of the element in the group after the runtime request is received by applying the policy rules comprises evaluating the runtime request using script maintained by an administrator that defines membership rules for an element in a group.

4. The method of claim 3, wherein the script comprises a scripting language having at least one declarative IF/THEN statement.

5. The method of claim 1, wherein receiving a runtime request to determine if an element is a member of a group comprises receiving a runtime request having at least one parameter from the application, and wherein evaluating membership of the element in the group comprises evaluating the policy rules along with the at least one parameter.

6. The method of claim 5, wherein receiving a runtime request having at least one parameter from the application comprises receiving from the application a request to determine if a user has access permission and passing to an evaluation engine parameters of the user.

7. The method of claim 1, wherein sending a response to the application, wherein the response is an indication of membership of the element in the group comprises sending one of an access grant and an access denial concerning a user to an application that requested an access determination.

8. The method of claim 1, wherein receiving, from a software application, a runtime request to determine if an element is a member of a group comprises receiving the runtime request by an evaluation engine via an application programming interface called by the application.

9. A system for determining membership of an element in a group, the system comprising;
a software application;
a storage area for a script, the script being separate from the application;
an interface for editing the script;
an evaluation engine for executing the script; and
at least one processor having access to memory, the memory having instructions which when executed, perform a method comprising:
receiving, from the software application, a request to determine if an element is a member of a group, the request being received by the evaluation engine having policy rules defining the group;
evaluating membership of the element in the group after the request is received by executing the script; and
responding to the request by providing the application an indication of membership of the element in the group.

10. The system of claim 9, further comprising an application programming interface accessed by the application to invoke the function of the evaluation engine.

11. The system of claim 9, further comprising an external data source accessed by the evaluation engine to retrieve at least one external parameter useful for determination of membership of an element in a group.

12. The system of claim 9, wherein the script comprises a scripting language having at least one IF/THEN statement.

13. The system of claim 9, wherein the method step of receiving a request to determine if an element is a member of a group comprises receiving a runtime request having at least one parameter from the application, and wherein evaluating membership of the element in the group comprises evaluating the policy rules along with the at least one parameter.

14. The system of claim 13 , wherein the method step of receiving a request having at least one parameter from the application comprises receiving from the application a request to determine if a user has access permission and passing to an evaluation engine parameters of the user.

15. The computer system of claim 9, wherein the method step of sending a response to the application, wherein the response is an indication of membership of the element in the group comprises sending one of an access grant and an access denial concerning a user to an application that requested an access determination.

16. A computer-readable medium, comprising instructions which execute a method of determining membership of an element in a group, the method comprising:
receiving, from a software application, a request to determine if an element is a member of a group, the request being received by an evaluation engine having policy rules defining the group;
evaluating membership of the element in the group after the request is received by executing a script maintained separately from the software application and being available to an administrator for modification independently of the software application; and
sending a response to the software application, wherein the response is an indication of membership of the element in the group.

17. The computer-readable medium of claim 16, further comprising the step of:
accessing a database external to the application to acquire additional information for evaluation of the request.

18. The computer-readable medium of claim 16, wherein evaluating membership of the element in the group comprises evaluating a script having at least one IF/THEN statement.

19. The computer-readable medium of claim 16, wherein the step of receiving, from a software application, a request to determine if an element is a member of a group comprises receiving the request by an evaluation engine via an application programming interface called by the application.

20. The computer-readable medium of claim 16, wherein the step of sending a response to the application, wherein the response is an indication of membership of the element in the group comprises sending one of an access grant and an access denial concerning a user to an application that requested an access determination.
